# EUROPEAN PATENT SPECIFICATION

(11) **EP 0 315 492 B1**
(45) Date of publication and mention of the grant of the patent: **24.02.1993**
(21) Application number: 88310460.6
(22) Date of filing: 07.11.1988
(51) Int. Cl.: B60J 7/04

(54) **Sliding roof for a motor vehicle**
Schiebedach für ein Kraftfahrzeug
Toit ouvrant pour un véhicule automobile

(30) Priority: 06.11.1987 DE 3737725
(43) Date of publication of application: 10.05.1989
(73) Proprietor: FORD MOTOR COMPANY LIMITED, Brentwood, Essex CM13 3BW (GB); FORD-WERKE AKTIENGESELLSCHAFT, 50725 Köln (DE); FORD FRANCE S. A., 92506 Rueil-Malmaison Cédex (FR)
(72) Inventor: Kloppe, Herbert, D-5024 Pulheim (DE); Vogt, Hans, D-5063 Oberath (DE)
(74) Representative: Messulam, Alec Moses

(56) References cited:
- DE-A- 3 316 739
- DE-C- 3 532 150

## Description

The invention relates to a sliding roof for a motor vehicle.

German Patent DE-C 35 32 150 discloses a tilting and sliding roof for a motor vehicle with laterally guided louver-like sections which are displaceable in the longitudinal axis of the vehicle and which are movable along a slide rail by way of sliding and guiding members. It is possible in this roof first to tilt upwards the first section into a raised position, then to tilt upwards the other sections and last to slide the sections in their raised position to stack them together at the rear of the roof so as to free the roof opening. The actuating device in this patent is constructed in the form of a threaded spindle which lies in the slide rail and which acts upon sliding members by way of vertical entrainment pins so as to displace them. A locking device is provided which locks or releases the sliding and guiding members against one another or with respect to the slide rail.

In the case of this known tilting and sliding roof for motor vehicles, the guide members cooperating with the sliding members are constructed as slide blocks, at which the push-out operation is adversely affected by accumulations of tolerance. The locking members which lock the sliding and guiding members against one another and the locking members which lock the sliding members with respect to the slide rail are separate from one another and thus call for a considerable structural outlay.

The present invention seeks to provide a sliding roof having a plurality of louver-like sections in which the foregoing disadvantages are mitigated.

According to the present invention, there is provided a sliding roof for a motor vehicle having a plurality of louver-like roof sections capable of tilting and sliding, wherein at least some of the roof sections are each mounted on a support block so as to be capable of pivoting about a generally horizontal axis relative to the support block, and wherein the support block is mounted on a guide rail and is coupled by means of a pin to a threaded spindle so that as the spindle rotates, the support block moves along the guide rail, characterised in that a slide block is guided for movement parallel to the guide rail and is coupled by means of a pin to a second threaded spindle arranged parallel to the first spindle, the slide block being connected to the roof section through means for converting linear movement of the slide block into pivotal movement of the roof section in such a manner that movement of the slide block relative to the support block along the spindle axis is operative to cause the roof section to pivot on the support block.

Preferably, each slide block carries a rack engageable with a pinion rotatably mounted on the associated support block, whereby movement of the slide block relative to the support block causes rotation of the pinion, the pinion having an eccentric pin arranged to raise or lower the associated roof section in response to rotation of the pinion.

In the preferred embodiment of the invention, the first roof section is mounted for pivotal movement on a stationary support block and is pivotable by a pinion which is mounted on the support block and is connected to the first roof section by a crank mechanism, the pinion engaging a rack carried by a slide block which is axially displaceable with the second spindle and wherein the pinion for raising the first roof section is coupled to the first roof section without lost motion while the remaining roof sections are coupled to their associated pinions through lost motion couplings.

The first section of the window in this embodiment of the invention is raised by axial movement of the second spindle widely the raising of the remaining roof sections is effected by relative rotation of the two spindles. The provision of lost motion couplings in the drive for raising the rear roof sections permits the front roof section to be raised independently of the remaining roof sections during the initial opening movement.

The invention will now be described further, by way of example, with reference to the accompanying drawings, in which:-
Fig. 1 is a diagrammatic vertical longitudinal section through a tilting and sliding roof of the invention in the closed position, with the actuating mechanism shown in part,
Fig. 2 is a view similar to that of Fig. 1 showing the sliding roof 1 in its opened position,
Fig. 3 is a partial diagrammatic plan view of the sliding roof of Fig. 1,
Fig. 4 is a side view of the part of the actuating mechanism in circle IV in Fig. 1, drawn to an enlarged scale,
Fig. 5 is the view similar to that of Fig. 4 with the front section in a raised position,
Fig. 6 is a section along the line VI-VI in Fig. 1, and
Fig. 7 is a side view of the part of the actuating mechanism in circle VII in Fig. 1 drawn to an enlarged scale.

The illustrated embodiment of a tilting and sliding roof for a motor vehicle comprises five roof sections 1, 2, 3, 4 and 5 driven by an actuating mechanism powered by an electric motor 10, the roof sections preferably consisting of tinted glass panels.

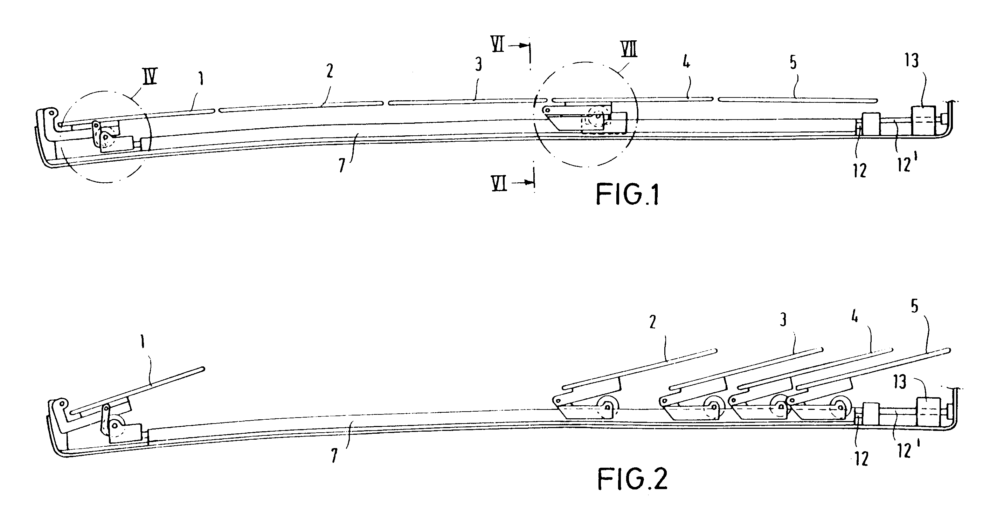

The actuating mechanism is designed in such a manner that in use, during initial opening movement of the actuating mechanism of the sliding roof, the section 1 is moved into a tilted position in which it provides ventilation. Upon further opening movement of the actuating mechanism, the sections 2, 3, 4 and 5 are likewise pushed out upwards and lastly further actuation causes all the rear sections 2, 3, 4 and 5 to be pushed together and stacked towards the rear of the roof in a manner similar to a venetian blind so as to free a maximum roof opening, this being the position shown in Figure 2. In its most open condition, the first section 1 remains in its raised position and does not slide to the back of the roof so as to act as a spoiler to reduce wind noise.

In closing the roof, the above operations are reversed and the roof sections 2 to 4 are first brought forward, then they are pivoted into their closed position and lastly the front roof section 1 is pivoted into its closed position

The tilting and sliding roof is formed as a completely pre-assembled unit which comprises a front cross member 6, two lateral guide rails 7 and a rear cross member 8. The front cross member 6 includes hinges 9 for the first section 1, since in the present embodiment the first section 1 remains in its ventilating pushed-out or spoiler position. The electric motor 10 is mounted on the rear cross member 8.

The actuating mechanism for moving and tilting the roof sections 1 to 5 comprises two threaded spindles 12 and 12' each located in a respective guide rails 7 and 7', and extending from a front bearing block 11 to a rear mounted transmission box 13. The transmission box 13 is driven by the motor 10 through a flexible drive shaft 14 and in turn drives the two threaded spindles 12 and 12' in a manner to be described below. The threaded spindles 12 and 12' are not of constant pitch along their length but they each have three regions of progressively increasing pitch. Because of the manner in which they are located in the slide rails 7 and 7', the threaded spindles 12 and 12' are supported without difficulty over their entire length.

Referring now to Figures 6 and 7, the guide rails 7 and 7' are each provided at the top with a gap 15 and 15' respectively (see Fig. 6) through which vertical entrainment pins 17 and 16 for a support block 21 and a slide block 22 project and come into contact with the threads on the threaded spindles 12 and 12'.

Grooves 18 and 18' in the guide rails 7 and 7, are engaged by pins 19 and 19' in the support block 21 and the slide block 22, respectively, to ensure that the blocks 21 and 22 can only move along the axes of their respective guide rails 7 and 7'.

The slide block 22 carries to one side and at its base a toothed rack 29, while the support block 21 carries on its side facing the slide block 22 a pinion 28 which engages with the rack 29 of the slide block 22. Movement of the slide block 22 relative to the support block 21 therefore causes the pinion 28 to rotate about its own axis. The roof section 4 is mounted on a plate 35, which is part of a lever arm 33 pivoted about a pin 34 on a forward extension of the support block 21. The lever arm 33 also has a plate 32 with a bent slot 31 into which there engages a pin 30 projecting laterally from the pinion 28.

As will be described below, the slide block 22 can be moved relative to the support block 21 by either axially displacing the threaded spindle 12' relative to the spindle 12 or by rotating the threaded spindle 12' relative to the spindle 12. Such displacement of the slide block 22 moves the rack 29 and thus rotates the pinion 28 between the closed position of the roof section 4 shown in solid lines in Figure 7 and an open position shown in chain dotted lines. The rotation of the pinion 28 raises the roof section 4 about the axis of the pivot 34. The presence of the slot 31 in the plate 32 provides a lost motion coupling for reasons which will also become apparent below.

For the operation of the rear roof sections 2 to 5, it will be clear that if both spindles 12 and 12' are rotated at the same rate then the roof sections will merely slide along the guide rail 7 and the tilt of the sections will not change. Because of the increasing thread pitch along the length of the spindles 12 and 12', the roof sections will not all move at the same rate and instead the forward sections will move faster than the rear sections so that at the end of their travel, the sections 2 to 5 stack in the manner shown in Figure 2.

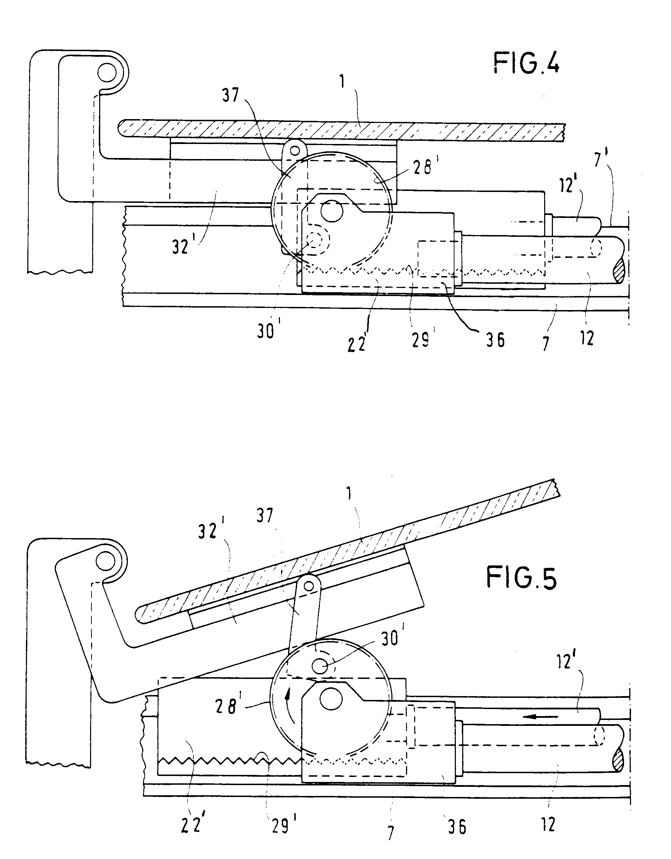

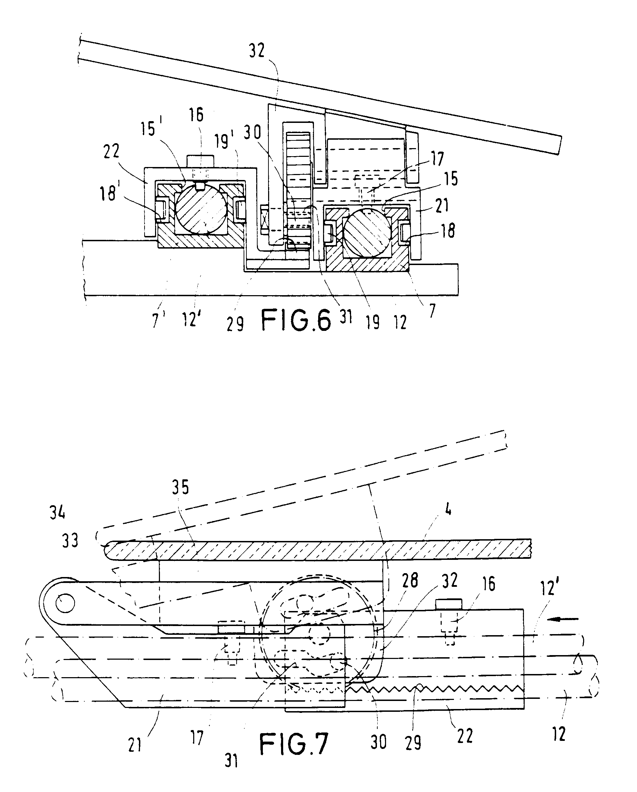

The front roof section 1, unlike the other sections stays still at all times and only pivots upwards at the start of opening the roof. The manner in which this is achieved is similar to that of the rear sections and will now be described by reference to Figure 4 and 5. In these Figures equivalent parts have been allocated the same reference numerals but a prime has been added to the numerals.

The pivoting of the roof section 1 is again effected by rotation of a pinion 28' using a rack 29' on a slide block 22'. In this case, however, the pin 30' on the pinion 28' is rigidly connected to the plate 32' through a crank arm 37. The slide block 22' is not driven by an entrainment pin but is connected to the spindle 12' by a bearing which permits the spindle 12' to rotate without axially moving the slide block 22'. Furthermore, the pinion is mounted on a stationary support block 36 which does not move as the spindle 12 rotates.

In the case of the first roof section 1, the slide block 22' can only be moved by axial displacement of the spindle 12' and not by its rotation. Movement of the slide block 22' causes the pinion 28' to rotate through the action of the rack 29' and this in turn raises the roof section 1 through the action of the crank pin 30' and the crank arm 37.

A complete operating cycle of the sliding roof from its closed position, to the fully open position and returning to the closed position will now be described and from this the operation of the transmission box 13 will be better understood.

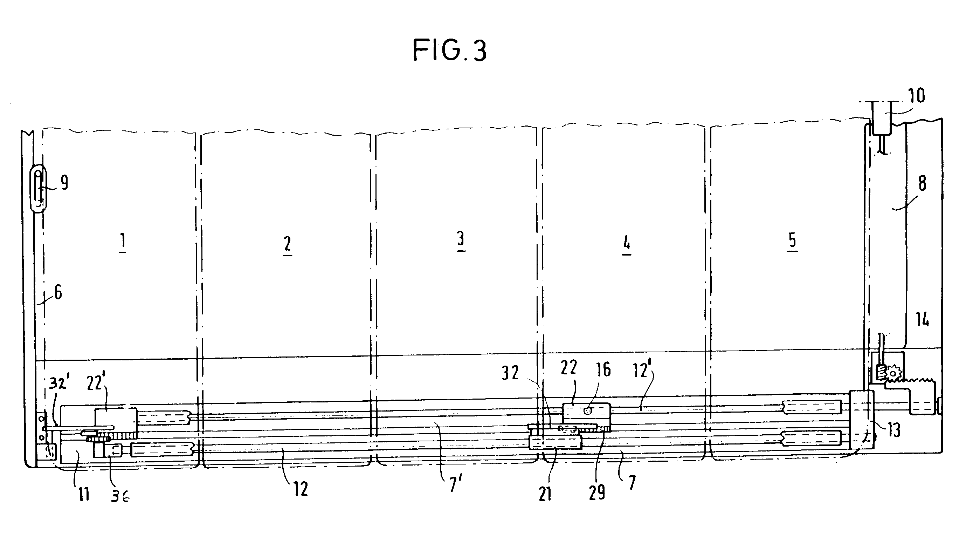

To raise the front roof section 1 from the position shown in Figure 4 to that of Figure 5, the spindle 12' is moved to the left as viewed. This is effected by means of a rack and pinion seen to the right of the drawing in Figure 3. The rack 29' during this movement rotates the pinion 28' and raises the first roof section 1. At the same time, all the slide blocks 22 for the remaining roof sections 2 to 5 are also moved axially on account of their entrainment pins 16 but the resulting rotation of the pinions 28 by the racks 29 does not raise the rear roof sections 2 to 5 but only succeeds in taking up the slack in the lost motion couplings. The pins 30 move along the slots 31 but do not reach the end positions of the slots 31 to permit them to tilt the roof sections significantly. The movement of the pinions 28 is instead only sufficient to unlock the roof sections 2 to 5 from their fully closed position.

From this point on, the spindle 12' does not move axially and all further movement of the rear sections is effected by rotation of the spindles 12 and 12'. As these spindles have rotary connections at their front ends with the slide block 22' and the support block 36, the front section 1 is unaffected by such rotation of the spindles 12 and 12'.

As earlier described, tilting of the rear roof sections can be effected by rotating the spindle 12' relative to the spindle 12 and this can be done with the spindle 12 either stationary or moving. If the spindle 12 is stationary, then rotation of the spindle 12' will cause the rear roof sections 2 to 5 to tilt without moving backwards along the roof opening. Sliding movement of the sections to stack these sections at the rear of the roof opening can then be done subsequently by rotating the two spindles 12 and 12' at the same speed. As an alternative, the two spindles can be rotated at the same time and at slightly different speeds and the effect of this is to raise the rear sections and slide them backwards at the same time.

The spindle 12' must be constructed so that it can slide through the transmission box 13 and yet be rotatable by the motor 10. For this purpose, the spindle has a splined end passing through the transmission box 13. The latter in the present embodiment is constructed with two worm drives with slightly different ratios so that the spindle 12' always turns at the same time as the spindle 12 but faster. This achieves simultaneous raising and sliding of the rear roof sections 2 to 5.

If sequential operation is required, it is alternatively possible for the transmission box 13 to include a clutch operable mechanically or electrically to permit the spindle 12' to be turned while the spindle 12 remains stationary. As a still further alternative, the spindles 12 and 12' may be driven from separately controlled electric motors.

When the roof is to be closed, the drive is reversed. The rear roof sections 2 to 5 now move forwards and either at the same time or subsequently are pivoted downwards into their closed position. Some of the lost motion may be taken up during the anti-clockwise rotation of the pinions 28. At the end of the rotary movement, which does not affect the front roof section, the spindle 12' is move to the right as viewed to lower the front roof section 1 and lock the rear roof sections in the lower position by driving the pins 30 through the bent slots 31.

The described embodiment of a sliding roof offers particular advantages when large roof sections are to be locked, moved and stacked, such as may be necessary for example in the case of buses or motor caravans.

## Claims

1. A sliding roof for a motor vehicle having a plurality of louver-like roof sections (1 to 5) capable of tilting and sliding, wherein at least some of the roof sections (2 to 5) are each mounted on a support block (21) so as to be capable of pivoting about a generally horizontal axis relative to the support block (21), and wherein the support block is mounted on a guide rail (7) and is coupled by means of a pin (17) to a threaded spindle (12) so that as the spindle (12) rotates, the support block (21) moves along the guide rail (7), characterised in that a slide block (22) is guided for movement parallel to the guide rail (7) and is coupled by means of a pin (16) to a second threaded spindle (12') arranged parallel to the first spindle (12), the slide block (22) being connected to the roof section (2 to 5) through means for converting linear movement of the slide block (22) into pivotal movement of the roof section, in such a manner that movement of the slide block (22) relative to the support block (21) along the spindle axis is operative to cause the roof section (2 to 5) to pivot on the support block (21).

2. A sliding roof as claimed in Claim 1, wherein each slide block (22) carries a rack (29) engageable with a pinion (28) rotatably mounted on the associated support block (21), whereby movement of the slide block (22) relative to the support block (21) causes rotation of the pinion, the pinion having an eccentric pin (30) arranged to raise or lower the associated roof section (2 to 5) in response to rotation of the pinion (28).

3. A sliding roof as claimed in Claim 2, wherein the first roof section (1) is mounted for pivotal movement on a stationary support block (36) and is pivotable by a pinion (28') which is mounted on the support block (36) and is connected to the first roof section (1) by a crank mechanism (37), the pinion (28') engaging a rack (29') carried by a slide block (22') which is axially displaceable with the second spindle (12') and wherein the pinion (28') for raising the first roof section (1) is coupled to the first roof section (1) without lost motion while the remaining roof sections (2 to 5) are coupled to their associated pinions (28) through lost motion couplings (30, 31).

4. A sliding roof as claimed in Claim 3, wherein the two spindles (12 and 12') are connected to be driven simultaneously but at different speeds.

5. A sliding roof as claimed in Claim 3, wherein the the first spindle (12) may be selectively disengaged from the drive to the second spindle (12') whereby the second spindle (12') may be driven independently of the first spindle to raise and lower the roof sections (2 to 5) or at the same time as the first spindle (12) to move the roof sections (2 to 5) along the roof opening.

6. A sliding roof as claimed in Claim 3, wherein independent motors are provided for driving the two spindles (12 and 12').

## Patentansprüche

1. Schiebedach für ein Kraftfahrzeug, mit mehreren klapp- und verschiebbaren jalousieartigen Dachabschnitten (1 bis 5), worin wenigstens einige der Dachabschnitte (2 bis 5) jeweils in einem Trägerblock (21) derart gelagert sind, daß sie um eine im wesentlichen horizontale Achse relativ zu dem Trägerblock (21) verschwenkt werden können, und worin der Trägerblock in einer Führungsschiene (7) montiert ist und mittels eines Stiftes (17) mit einer Gewindespindel (12) gekoppelt ist, derart, daß, wenn sich die Spindel (12) dreht, sich der Trägerblock (21) längs der Führungsschiene (7) bewegt, dadurch gekennzeichnet, daß ein Gleitblock (22) parallel zur Führungsschiene (7) bewegber geführt wird und mittels eines Stiftes (16) mit einer zweiten Gewindespindel (12') gekoppelt ist, welche parallel zur ersten Spindel (12) angeordnet ist, wobei der Gleitblock (22) mittels einer Vorrichtung mit den Dachabschnitten (2 bis 5) verbunden ist, welche die Linearbewegung der Gleitblockes (22) in eine Schwenkbewegung des Dachabschnittes umwandelt, derart, daß eine Bewegung des Gleitblockes (22) relativ zum Trägerblock (21) längs der Spindelachse so wirksam ist, daß sie ein Verschwenken des Dachabschnittes (2 bis 5) in dem Trägerblock (21) bewirkt.

2. Schiebedach nach Anspruch 1, worin jeder GleitblocK (22) eine Zahnstange (29) trägt, die mit einem drehbar in den zugeordneten Trägerblock (21) eingebauten Ritzel (28) in Eingriff treten kann, wodurch eine Bewegung des Gleitblockes (22) relativ zum Trägerblock (21) eine Drehung des Ritzels bewirkt, wobei das Ritzel einen Exzenterzapfen (30) aufweist, der so angeordnet ist, daß er den zugeordneten Dachabschnitt (2 bis 5) in Reaktion auf eine Drehung des Ritzels (28) hebt oder senkt.

3. Schiebedach nach Anspruch 2, worin der erste Dachabschnitt (1) schwenkbar beweglich in einem ortsfesten Trägerblock (36) gelagert ist und mittels eines Ritzels (28') verschwenkt werden kann, welches in den Trägerblock (36) eingebaut ist und über ein Kurbelgetriebe (37) mit dem ersten Dachabschnitt (1) verbunden ist, wobei das Ritzel (28') mit einer Zahnstange (29') in Eingriff steht, die von einem mit der zweiten Spindel (12') axial verschiebbaren Gleitblock (22') getragen wird, und worin das zum Heben und Senken dem ersten Dachabschnittes (1) bestimmte Ritzel spielfrei mit dem ersten Dachabschnitt (1) gekoppelt ist, während die übrigen Dachabschnitte (2 bis 5) über Totgang-Kupplungen (30, 31) mit ihren zugeordneten Ritzeln (28) gekoppelt sind.

4. Schiebedach nach Anspruch 3, worin zwei Spindeln (12 und 12') so miteinander verbunden sind, daß sie gleichzeitig, jedoch mit unterschiedlichen Geschwindigkeiten angetrieben werden können.

5. Schiebedach nach Anspruch 3, worin die erste Spindel (12) selektiv vom Antrieb der zweiten Spindel (12') abgekuppelt werden kann, wodurch die zweite Spindel (12') entweder unabhängig von der ersten Spindel angetrieben werden kann, um die Dachabschnitte (2 bis 5) zu heben oder zu senken, oder gleichzeitig mit der ersten Spindel (12), um die Dachabschnitte (2 bis 5) längs der Dachöffnung zu bewegen.

6. Schiebedach nach Anspruch 3, worin unabhängige Motoren zum Antrieb der beiden Spindeln (12 und 12') vorgesehen sind.

## Revendications

1. Toit ouvrant coulissant pour un véhicule automobile, comprenant une série de sections (1 à 5) de toit en forme de lamelles de store, capables de basculer et de coulisser, dans lequel certaines au moins des sections (2 à 5) de toit sont chacune montées sur un bloc (21) de support de manière à pouvoir pivoter par rapport au bloc (21) de support, autour d'un axe généralement horizontal, et dans lequel le bloc de support est monté sur un rail (7) de guidage et est accouplé, au moyen d'une goupille (17), à une broche filetée (12), de telle sorte que, lorsque la broche (12) tourne, le bloc (21) de support se déplace le long du rail (7) de guidage, caractérisé en ce qu'un bloc (22) de coulissement est guidé en vue d'un mouvement, parallèle au rail (7) de guidage et est accouplé, au moyen d'une goupille (16), à une seconde broche filetée (12') agencée parallèlement à le première broche (12), le bloc (22) de coulissement étant relié à la section (2 à 5) de toit par l'intermediaire de moyens destinés à convertir le mouvement linéaire du bloc (22) de coulissement en un mouvement de pivotement de la section de toit, de telle maniere que le déplacement du bloc (22) de coulissement par rapport au bloc (21) de support le long de l'axe de la broche provoque le pivotement de la section (2 à 5) de toit dans le bloc (21) de support.

2. Toit ouvrant coulissant selon la revendication 1, dans lequel chaque bloc (22) de coulissement porte une crémaillère (29) pouvant entrer en engagement avec un pignon (28) monté de taçon rotative sur le bloc de support associé (21), ce qui a pour effet que le déplacement du bloc (22) de coulissement par rapport au bloc (21) de support entraîne la rotation du pignon, le pignon comprenant un axe excentré (30) qui est disposé de maniere à lever ou à baisser la section associée (2 à 5) de toit en réponse à une rotation du pignon (28).

3. Toit ouvrant coulissant selon la revendication 2, dans lequel la première section (1) de toit est montée dans un bloc stationnaire (36) de support en vue d'un mouvement pivotant et peut être amenée à pivoter au moyen d'un pignon (28') qui est monté sur le bloc (36) de support et est relié à la première section (1) de toit par l'intermédiaire d'un mécanisme (37) à manivelle, le pignon (28') entrant en engagement avec une crémaillère (29') portée par un bloc (22') de coulissement qui peur être déplacé axialement en même temps que la seconde broche (12'), et dans lequel le pignon (28') destiné à lever la première section (1) de toit est accouplé sans jeu à la première section (1) de toit, alors que les autres sections (2 à 5) de toit sont accouplées à leurs pignons associés (28) par l'intermediaire d'accouplements (30, 31) à course morte.

4. Toit ouvrant coulissant selon la revendication 3, dans lequel les deux broches (12 et 12') sont reliées de manière à être entrainées simultanément, mais à des vitesses différentes.

5. Toit ouvrant coulissant selon la revendication 3, dans lequel la première broche (12) peut être désengagée de façon sélective de la seconde broche (12'), ce qui fait que la seconde broche (12') peut être entrainée soit indépendamment de la première broche de manière à lever et à baisser les sections (2 à 5) de toit, soit en même temps que la première broche (12) de manière à déplacer les sections (2 à 5) de toit le long de l'ouverture du toit.

6. Toit ouvrant coulissant selon la revendication 3, dans lequel des moteurs indépendants sont prévus pour entraîner les deux broches (12 et 12').
